Europäisches Patentamt

European Patent Office

Office européen des brevets

(19)

(11) **EP 0 790 491 A2**

## (12) EUROPÄISCHE PATENTANMELDUNG

(43) Veröffentlichungstag:
20.08.1997 Patentblatt 1997/34

(51) Int. Cl.$^6$: **G01J 5/12**

(21) Anmeldenummer: 97101710.8

(22) Anmeldetag: **04.02.1997**

(84) Benannte Vertragsstaaten:
**CH DE FR GB IT LI**

(30) Priorität: **14.02.1996 DE 19605384**

(71) Anmelder: **Fortech HTS GmbH**
**93051 Regensburg (DE)**

(72) Erfinder: **Betz, Josef, Dr.**
**93051 Regensburg (DE)**

(74) Vertreter: **Graf, Helmut, Dipl.-Ing. et al**
**Postfach 10 08 26**
**93008 Regensburg (DE)**

(54) **Thermoelektrischer Sensor**

(57)     Die Erfindung bezieht sich auf einen neuartigen thermoelektrischen Sensor zur Bestimmung oder Messung der thermischen Leistung einer Strahlung, insbesondere Laserstrahlung, mit wenigstens einem thermoelektrischen Detektor- oder Sensorelement, welches eine aktive Detektorfläche aus einer dünnen aktiven Schicht eines kristallinen Festkörpers mit anisotroper Thermokraft aufweist und bei dem die Oberflächennormale der Schicht nicht mit einer der Hauptanisotropierichtungen zusammenfällt, wobei an der dünnen, aktiven Schicht wenigstens zwei Kontakte zum Abgreifen einer von der thermischen Leistung abhängigen Spannung vorgesehen sind.

Fig.1

EP 0 790 491 A2

## Beschreibung

Die Erfindung bezieht sich auf einen thermoelektrischen Sensor gemäß Oberbegriff Patentanspruch 1.

Ein solcher Sensor ist bekannt als thermoelektrischer Detektor zum detektieren von kontinuierlicher und gepulster Strahlung (DE 43 06 497 C2). Ein Detektor dieser Art kann als schnell reagierender Sensor zur Messung der thermischen Leistung einer Strahlung, insbesondere Laserstrahlung eingesetzt werden. Die aktive Schicht besteht hierbei aus einer dünnen anisotropen Hochtemperatursupraleiterschicht, die auf einem einkristallinen Substrat mit einem Kippwinkel aufgewachsen ist. An Kontaktflächen kann eine Spannung abgegriffen werden, die proportional zu dem Temperaturgradienten zwischen der Temperatur an der Oberseite der aktiven Schicht und derjenigen Temperatur ist, die die aktive Schicht am Übergang zum Substrat besitzt.

Der bekannte thermische Detektor hat grundsätzlich den Vorteil, daß die aktive Schicht sehr dünn mit geringer Masse ausgeführt werden kann und hierdurch sehr kurze Zeitkonstanten im Bereich von ns erreichbar sind.

Nachteilig ist aber insbesondere, daß bei einer kontinuierlichen Belastung bzw. Strahlung, insbesondere auch bei einer kontinuierlichen Belastung mit höhere Durchschnittsleistung, der bekannte thermoelektrische Detektor bzw. dessen Ausgangsspannung ein ausgeprägtes Driftverhalten aufweist, das darin besteht, daß die Meß- oder Ausgangsspannung trotz gleichbleibender Bestrahlung abfällt. Nachteilig ist bei dem bekannten Detektor auch, daß diese Signaldrift weiterhin abhängig ist von der Bewegung der auf die aktive Schicht auftreffenden Strahlung entlang dieser aktiven Schicht, d.h. eine Bewegung beispielsweise von einem Millimeter kann die Signaldrift um den Faktor 10 erhöhen.

Aufgabe der Erfindung ist es, diese Nachteile zu vermeiden und einen Sensor aufzuzeigen, der auch bei Dauerbestrahlung eine der Leistung proportionale Ausgangsspannung liefert, deren Drift auf einen vernachlässigbaren Wert reduziert ist.

Zur Lösung dieser Aufgabe ist ein Sensor entsprechend dem Patentanspruches 1 ausgebildet. Ein Temperatursensor ist entsprechend dem Patentanspruch 8 ausgebildet.

Bei dem erfindungsgemäßen Sensor wird durch die Optik der Durchmesser des jeweils zu messenden Strahles (z.B. Laserstrahl) so reduziert, daß der auf der aktiven Schicht abgebildete Strahl bzw. Spot eine Fläche aufweist, die wesentlich kleiner ist als die Fläche der aktiven Schicht, beispielsweise gleich 50% oder kleiner ist als 50% der Fläche der aktiven Schicht. Das Zentrum des Strahles liegt dabei mittig in bezug auf die Kontakte. Hierdurch kann die durch den auftreffenden Strahl in der aktiven Schicht erzeugte Wärme über das Substrat abfließen, ohne daß sich laterale Temperaturgradienten aufbauen, die zu einer Drift der Ausgangsspannung führen.

Wesentlicher Bestandteil der Erfindung ist weiterhin die symmetrische Kühlung, die dafür sorgt, daß insbesondere auch im Bereich der beiden Kontakte jeweils gleiche Temperaturverhältnisse, insbesondere auch in der aktiven Schicht bestehen, sich also auch insofern keine eine Drift des Ausgangssignales verursachenden lateralen Temperaturgradienten aufbauen können.

Weiterbildungen der Erfindung sind Gegenstand der Unteransprüche.

Die Erfindung wird im Folgenden anhand der Figuren an einem Ausführungsbeispielen näher erläutert. Es zeigen:

Fig. 1 in vereinfachter Darstellung und im Schnitt eine Ausführungsform des erfindungsgemäßen thermoelektrischen Sensors;

Fig. 2 in vergrößerter Einzeldarstellung einen Schnitt durch das Substrat und die aktive Detektorschicht des Detektorelementes zur Verwendung bei dem Sensor der Figur 1;

Fig. 3 eine Draufsicht auf das Detektorelement der Figur 1;

Fig. 4 in vereinfachter Darstellung und im Längsschnitt einen für eine Temperaturmessung geeigneten Sensor gemäß der Erfindung;

Fig. 5 in vergrößerter Detaildarstellung das Sensorelement des Temperatursensors der Fig. 4.

Der in den Figuren dargestellte Sensor besteht im wesentlichen aus einem geschlossenem Gehäuse 1 mit einer Umfangswand 2, mit einem Gehäuseboden 3 und mit einem oberen Gehäuseabschluß 4.

Im Inneren des Gehäuses ist das den aktiven Teil des Sensors bildende Sensorelement 5 untergebracht, und zwar an der dem Gehäuseabschluß 4 gegenüberliegenden Seite des Bodens 3.

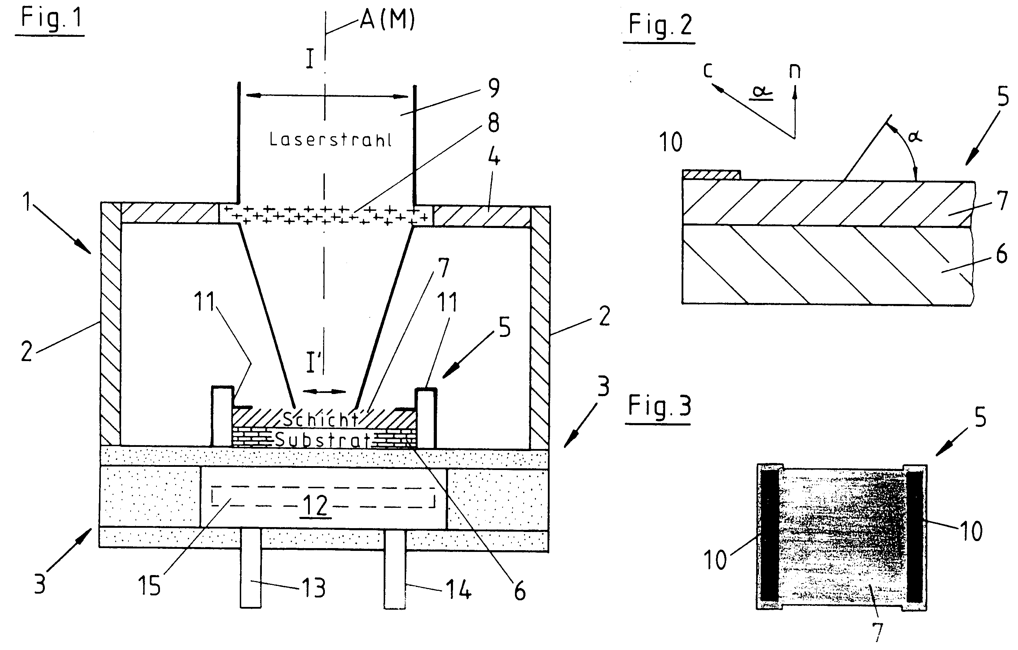

Das Sensorelement 5, welches im Detail bzw. im Schnitt in der Figur 2 nochmals wiedergegeben ist, ist ein thermoelektrischer Detektor, wie er dem Fachmann beispielsweise aus der DE 43 06 497 C2 bekannt ist. Dieser Detektor besteht aus dem Substrat 6 und aus der an einer Oberflächenseite dieses Substrates vorgesehenen dünnen aktiven Schicht 7. Im Sensor ist dieses Sensorelement derart montiert, daß die Schicht 7 dem Gehäuseabschluß 4 zugewandt ist und in einer Ebene liegt die senkrecht zu einer optischen Achse A einer Optik 8 angeordnet ist, die am Gehäuseabschluß 4 in Richtung der Achse A verstellbar vorgesehen ist und die die zu messende Strahlung 9 (z.B. Laserstrahl) auf der Schicht 7 in einer Fläche (Spot), vorzugsweise in einer Kreisfläche mit dem Durchmesser l' abbildet, der kleiner ist als die entsprechenden Abmessungen der Schicht 7 und weiterhin auch kleiner ist als der Durchmesser l des

zumessenden Strahles 9 vor dem Durchtritt durch die Optik 8.

Im einzelnen ist die aktive Schicht 7 eine dünne Schicht eines kristallinen Festkörpers mit anisotroper Thermokraft, wobei die Oberflächennormale der Schicht nicht mit einer der Hauptanisopropierichtungen zusammenfällt.

Als thermoelektrisch anisotropes Material wird beispielsweise ein Hochtemperatur-Supraleiter verwendet, wobei die Ausrichtung der Hauptanisopropieachsen beispielsweise durch epitaktisches Schichtwachstum auf einem geeignet orientierten, das Substrat 6 bildenden Kristall erreicht wird. Als thermoelektrisch anisotropes Material eignet sich beispielsweise der Hochtemperatur-Superleiter $RBa_2Cu_3O_{7-\delta}$ (R = seltene Erde). Die Ausrichtung der Anisotropieachsen erfolgt dann durch entsprechendes epitaktisches Wachstum auf einen das Substrat 6 bildenden Kristall, der so geschnitten ist, daß seine (100)-Flächen unter dem Winkel $\alpha > 0$ aus der Substratoberfläche austreten, so daß sich bei dem epitaktischen Schichtenwachstum auch ein entsprechender Winkel zwischen der Oberflächennormalen der Schicht 7 und der kristallographischen c-Achse dieser Schicht ergibt.

Für die Herstellung des Sensorelementes 5 kann beispielsweise, wie folgt, verfahren werden:

Auf einem $SrTiO_3$-Substrat, des (100)-Ebenen um den Winkel $\alpha$ ($\alpha > 0$) gegenüber der Oberfläche geneigt sind, wird durch Laserablation bei 680°C und 300 mTorr $O_2$-Atmosphäre eine dünne Schicht des Hochtemperatur-Superleiters $YBa_2Cu_3O_{7-\delta}$ (YBCO) aufgebracht. Die YBCO-(100)-Ebenen wachsen dabei parallel zu den $SrTiO_3$-(100)-Ebenen auf (Figur 2). Die kristallographische C-Achse der YBCO-Schicht bildet also den Winkel $\alpha$ mit der Oberflächennormalen.

Beim Auftreffen des Strahles 9 auf die Schicht 7 wird diese insbesondere an ihrer freiliegenden Oberseite stark erwärmt, so daß in Richtung der Dicke der Schicht 7 ein Temperaturgradient entsteht, der aufgrund des Winkels $\alpha$ u.a. auch ein von diesem Temperaturgradienten und damit von der thermischen Energie des Strahles 9 abhängiges Spannungsfeld parallel zu der Oberfläche der Schicht 7 erzeugt.

Zum Aufnehmen der durch die Erwärmung der Oberfläche der Schicht 7 erzeugten und von der Leistung des Strahles 9 abhängigen Ausgangsspannung dienen die beiden Kontakte 10, die bei der dargestellten Ausführungsform jeweils entlang eines Randes des quadratischen Sensorelement 5 auf der Oberseite der Schicht 7 vorgesehen sind und sich über die volle Länge einer Seite erstrecken. Die Kontakte 10 sind von dünnen Schichten aus Gold gebildet, und zwar dadurch, daß diese Schichten bzw. Kontakte 10 mit einem Laser aufgesputtert werden. Dies hat speziell bei dem Sensorelement 5 den Vorteil, daß durch das Aufsputtern Material der Kontakte 10 auch in die Schicht 7 eindringt und sich somit eine besonders hohe Haltbarkeit und Haftung für die Kontakte 10 ergibt.

Die elektrische Verbindung zu den Kontakten 10 erfolgt über Kontaktelemente 11, die als Kontaktfedern ausgeführt sind und zumindest an ihren Kontaktflächen aus Silber bestehen. Weiterhin sind die Kontaktelemente 11, insbesondere auch der Übergang zu den Kontakten 10 versiegelt, um eine Korrosion zu vermeiden.

Die an den Kontakten 10 anliegende Ausgangsspannung läßt sich, wie folgt, darstellen:

$$U = (Sab-Sc) \times (T1-T2) \times l'/d \times \sin(\alpha).$$

Hierbei sind:

Sab/Sc: Seebeckkoeffizienten (Materialkonstanten YBCO: Sc ca. 15μ V/K, Sab 0 V/K)
l': Spotdurchmesser
d: Schichtdicke der aktiven Schicht
$\alpha$: Kippwinkel
U: gemessene elektrische Ausgangsspannung
T1: Temperatur an der Oberfläche der aktiven Schicht
T2: Temperatur am Übergang zwischen der aktiven Schicht und dem Substrat.

Mit der der Schicht 7 abgewandten Oberflächenseite ist das Substrat 6 direkt auf der Innenfläche des Bodens 3 befestigt. Im Boden 3 ist eine Kühlung ausgebildet, und zwar symmetrisch zu einer Mittelebene M, zu der das Sensorelement 5 auch bezüglich der Kontakte 10 spiegelsymmetrisch ausgeführt ist und die die Achse A mit einschließt. Für diese symmetrische Kühlung ist im Boden ein Kühlraum oder Kühlkanal 12 gebildet, der von einem Kühlmedium (z.B. Wasser durchströmbar ist). Der Kühlkanal 12 erstreckt sich senkrecht zur Zeichenebene der Figur 1 über eine Länge, die größer ist als die Abmessung des Sensorelementes 5 in dieser Achsrichtung. Weiterhin ist die Breite des Kühlkanales 12 ebenfalls größer als die Breite des Sensorelementes 5, so daß dieses in allen seinen Bereichen zuverlässig durch das den Kühlkanal 12 durchströmende Medium gekühlt ist.

Zum Zuführen des Kühlmediums dienen die beiden Anschlüsse 13 und 14, die ebenfalls symmetrisch zur Mittelebene M angeordnet sind. Das Abführen des Kühlmediums erfolgt ebenfalls symmetrisch zur Mittelebene M beispielsweise dadurch, daß an einem Ende des Kühlkanals 12 ein sich über die gesamte Breite dieses Kanals erstreckende Auslaß 15 vorgesehen ist.

Um einen besonders guten und gleichmäßigen Wärmekontakt zwischen dem Substrat 6 und dem Boden 3 zu erreichen, ist das Substrat 6 an seiner Rückseite poliert und mit einer Wärmeleitpaste auf der ebenfalls polierten Fläche des Bodens 3 aufgebracht. Dadurch, daß die zu messende Strahlung 9 mit Hilfe der Optik 8 auf einen Spotdurchmesser l' konzentriert ist, der in seinen Abmessungen wesentlich kleiner ist als die Abmessungen der aktiven Schicht 7, sowie durch die symmetrische Kühlung wird erreicht, daß auch bei einer hohen Dauerbelastung von bis zu 20 Watt/cm$^2$ die

Drift bzw. Abweichung des an den Kontakten 10 anstehenden elektrischen Signals höchstens 1 bis 2% beträgt.

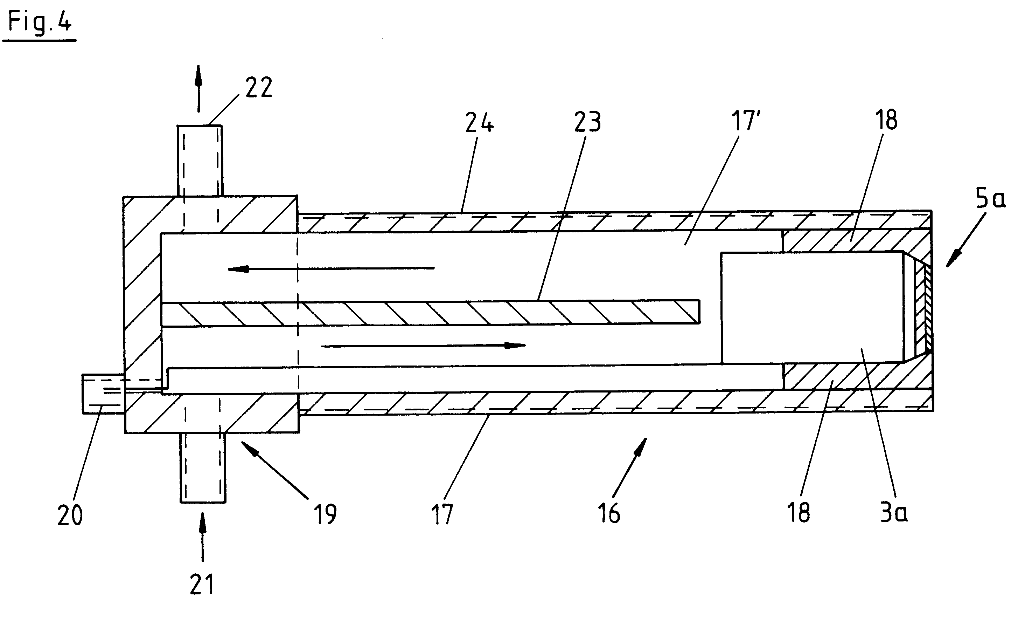

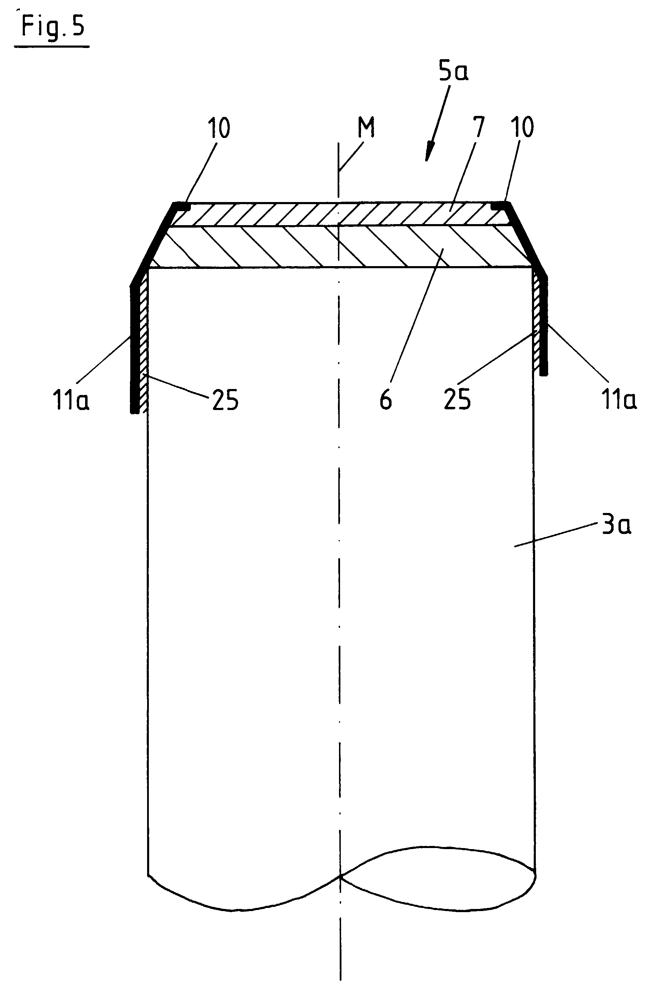

Die Fig. 4 und 5 zeigen einen Temperatursensor 16, der sich durch ein besonders schnelles Ansprechverhalten mit Ansprechzeiten im Bereich von 10 Nanosekunden auszeichnet und sich somit für sehr schnelle Temperaturmessungen eignet. Mit den derzeit auf dem Markt erhältlichen Temperatursensoren, wie beispielsweise Heißdrahtthermometer oder Dünnschichtwiderstände, können derartige Ansprechzeiten nicht realisiert werden.

Einsatzgebiete für den Temperatursensor 16 sind u.a.

- in der Strömungstechnik zur Untersuchung von Übergängen zwischen einer laminaren und turbulenten Strömung.oder
- in der Verbrennungsforschung, z.B. bei Verbrennungsmotoren zu sehen, wo der schnelle Temperatursensor 16 es gestattet, den zeitlichen Verlauf eines Verbrennungsvorganges exakt zu erfassen und darzustellen.

Der Temperatursensor 16 besteht aus einem rohrartigen Gehäuse 17, an dessen einem Ende das Sensorelement 5a vorgesehen ist. Letzteres ist in gleicher Weise wie das Sensorelement 5 aufgebaut, d.h. es besteht im wesentlichen aus dem Substrat 6 mit der aktiven Schicht 4 und aus dem als Kühlelement ausgebildeten Boden oder Träger 3a. Allerdings ist das Sensorelement 5a an der aktiven Schicht 7 und am Substrat 6 pyramidenstumpfförmig so ausgeführt ist, daß es sich zu der von der aktiven Schicht gebildeten Seite verjüngt und sich die Kontakte 11a ausgehend von der aktiven Schicht 7 schräg nach hinten von der aktiven Schicht 7 weg erstrecken. Das Sensorelement 5a liegt mit der dem Substrat 6 abgewandten Seite seiner aktiven Schicht 7 in einer Ebene mit der offenen Seite des Gehäuses 17. Der zwischen der Innenfläche des Gehäuses 17 und der Umfangsfläche des Sensorelementes 5a verbleibende Raum ist mit einer geeigneten, thermisch hoch belastbaren Eingußmasse 18 ausgegossen, und zwar insbesondere auch derart, daß die Kontakte 11a zumindest weitestgehend von der Eingußmasse 18 abgedeckt sind.

Auch das Sensorelement 5a besitzt eine rückseitige Kühlung zur Erzielung eines stabilen Referenzpunktes. Zur Kühlung dient der Träger 3a, der als Zylinderstück aus einem thermisch gut leitenden Material, nämlich aus Metall bzw. hergestellt ist und mit seinem dem Substrat 6 abgewandten Ende in einen im Inneren des Gehäuses 17 gebildeten Kühlraum 17' hineinreicht, welcher von einem Kühlmedium durchströmt wird. An dem anderen Ende des Zylinders 3a ist das Substrat 6 befestigt. Durch die am Träger 3a vorgesehene rückseitige und symmetrisch zur Mittelebene M zwischen den Kontakten 10 ausgebildete Kühlung hat auch der Temperatursensor 16 einen eindeutigen, festen Referenzpunkt und ein Driften durch Kontaktspannungen ist weitestgehend unterdrückt. Hierzu trägt auch die pyramidenstumpfartige Ausbildung des Sensorelementes bei.

Am dem dem Sensorelement abgewandten Ende des Gehäuses 17 ist ein Anschlußkopf 19 vorgesehen, der einen elektrischen Anschluß 20, an dem das elektrische Signal des Sensors 5a abgenommen werden kann, sowie zwei Anschlüsse 21 und 22 für das Kühlmittel aufweisen, von denen der Anschluß 21 zum Zuführen des Kühlmittels an den Kühlraum 17' und der Anschluß 22 zum Abführen des Kühlmittels aus dem Kühlraum 17' dient. Die Kühlmittelverbindungen zwischen den Anschlüssen 20 und 22 und dem Kühlraum 17' sind beispielsweise dadurch realisiert, daß im Gehäuse 17 und auch im Kopf 19 eine Trennwand 23 vorgesehen ist, die den vom Gehäuse 17 und dem Kopf 19 gebildeten Innenraum in zwei Teilkanäle unterteilt, wobei beide Känale jeweils mit dem Kühlraum 17' in Verbindung stehen und der eine Teilkanal den Anschluß 22 und der anderen Teilkanal den Anschluß 22 aufweist.

Das Gehäuse 17 ist an seiner das Sensorelement 5a aufweisenden Seite druckdicht abgeschlossen. Weiterhin weist das Gehäuse 17 an seiner Umfangsfläche ein Außengewinde 24 auf, welches ein Einschrauben, insbesondere auch ein druckdichtes Einschrauben des Temperatursensors 16 z.B. in die Wandung eines Brennraumes eines Verbrennungsmotors ermöglicht. Durch die flache Ausbildung an der das Sensorelement 5a aufweisenden Seite kann der Temperatursensor 16 in Strömungsbereichen niveaugleich mit einer Wandung angeordnet werden, so daß vorstehende, in die Strömung hineinreichende Abschnitte vermieden sind.

Durch die Einbettung der Kontakte 11 a in die Vergußmasse 18 sind diese Kontakte in ein temperaturstabiles Gefüge mit relativ großer thermischer Zeitkonstante eingebettet, so daß Störungen der Meßsignale der aktiven Schicht 7, die von temperaturbedingten Kontaktspannungen resultieren, vermieden sind, bzw. ohne Probleme von den schnellen Spannungssignalen der aktiven Schicht separierbar sind. Es versteht sich, daß die Kontakte gegenüber dem Träger 3a elektrisch isoliert sind (Isolator 25).

**Bezugszeichenliste**

| 1 | Gehäuse |
|---|---|
| 2 | Umfangswand |
| 3 | Boden |
| 3a | Zylinder |
| 4 | Gehäuseabschluß |
| 5 | Sensorelement |
| 6 | Substrat |
| 7 | Aktive Schicht |
| 8 | Optik |
| 9 | zu messender Strahl |
| 10 | Kontaktfläche |
| 11, 11a | Kontaktelement |

| 12 | Kühlkanal |
| 13, 14 | Kühlmittelanschluß |
| 15 | Kühlmittelauslaß |
| 16 | Temperatursensor |
| 17 | Gehäuse |
| 17' | Kühlraum |
| 18 | Vergußmasse |
| 19 | Anschlußkopf |
| 20 | Meßsignalanschluß |
| 21, 22 | Kühlmittelanschluß |
| 23 | Trennwand |
| 24 | Außengewinde |

**Patentansprüche**

1. Thermoelektrischer Sensor zur Bestimmung oder Messung der thermischen Leistung einer Strahlung, insbesondere Laserstrahlung, mit wenigstens einem thermoelektrischen Detektor- oder Sensorelement welches eine aktive Detektorfläche aus einer dünnen aktiven Schicht (7) eines kristallinen Festkörpers mit anisotroper Thermokraft aufweist und bei dem die Oberflächennormale der Schicht nicht mit einer der Hauptanisotropierichtungen zusammenfällt, wobei an der dünnen, aktiven Schicht (7) wenigstens zwei Kontakte (10) zum Abgreifen einer von der thermischen Leistung abhängigen Spannung vorgesehen sind, **dadurch gekennzeichnet**, daß im Strahlenweg der zu messenden Strahlung (9) eine Optik, vorzugsweise eine Kollimationsoptik (8) vorgesehen ist, die diese Strahlung auf der Oberfläche der aktiven Schicht (7) in einem Spot abbildet, dessen Durchmesser (l') in jeder in der Ebene der Oberfläche der aktiven Schicht (7) liegenden Achsrichtung kleiner ist als die Abmessung der aktiven Schicht (7) in der betreffenden Achsrichtung, und daß eine Kühlung (12, 13, 14, 15) für das Sensorelement (5) vorgesehen ist, die symmetrisch zu einer Mittelebene (M) ausgeführt ist, welche senkrecht zur Oberfläche der aktiven Schicht (7) angeordnet ist und zu welcher das Sensorelement (5) spiegelsymmetrisch ausgeführt ist.

2. Sensor nach Anspruch 1, dadurch gekennzeichnet, daß die Optik von einer Sammellinse (8) gebildet ist.

3. Sensor nach Anspruch 1 oder 2, dadurch gekennzeichnet, daß die Optik (8) in Richtung ihrer optischen Achse verstellbar ist.

4. Sensor nach einem der vorhergehenden Ansprüche, dadurch gekennzeichnet, daß die Kontakte (10) durch Aufsputtern oder Laser-Sputtern auf der Oberfläche der aktiven Schicht (7) erzeugt sind.

5. Sensor nach einem der vorhergehenden Ansprüche, dadurch gekennzeichnet, daß der äußere Anschluß zu den Kontaktflächen (10) über als Kontaktfedern wirkende Kontaktelemente (11) hergestellt ist.

6. Sensor nach einem der vorhergehenden Ansprüche, dadurch gekennzeichnet, daß die Fläche der auf das Sensorelement auftreffenden Strahlung höchstens gleich 50% der Fläche der aktiven Schicht (7) ist.

7. Sensor nach einem der vorhergehenden Ansprüche, dadurch gekennzeichnet, daß das Zentrum der auf das Sensorelement auftreffenden Strahlung bzw. die Achse der Optik mittig in bezug auf die Kontakte zum Abgreifen der Spannung liegt.

8. Thermoelektrischer Sensor zur Bestimmung oder Messung der Temperatur, mit wenigstens einem thermoelektrischen Detektor- oder Sensorelement (5a), welches eine aktive Detektorfläche aus einer dünnen aktiven Schicht (7) eines kristallinen Festkörpers mit isotroper Thermokraft aufweist und bei dem die Oberflächen normal der Schicht nicht mit einer der Hauptanisotropierrichtungen zusammenfällt, wobei an der dünnen aktiven Schicht (7) wenigstens zwei Kontakte (10) zum Anlegen einer von der thermischen Leistung abhängigen Spannung vorgesehen ist, dadurch gekennzeichnet, daß der thermoelektrische Sensor als Temperatursensor (16) ausgebildet ist, und daß eine Kühlung (5a, 17') für das Sensorelement (5a) vorgesehen ist, die symmetrisch zu einer Mittelebene (M) ausgeführt ist, welche senkrecht zur Ebene der aktiven Schicht (7) angeordnet ist und zu welcher das Sensorelement (5a) spiegelsymmetrisch ausgeführt ist.

9. Sensor nach Anspruch 8, gekennzeichnet durch mit den Kontakten (10) der aktiven Schicht (7) verbundenen Kontaktelemente (11), die sich jeweils von der Ebene der aktiven Schicht (7) zur rückwärtigen Seite des Sensorelementes (5a), vorzugsweise schräg nach rückwärts erstrecken.

10. Sensor nach Anspruch 8 oder 9, dadurch gekennzeichnet, daß das Sensorelement (5a) zur Kühlung auf einem von einem Kühlmedium durchströmten und/oder umströmten Träger aus einem thermisch leitenden Material befestigt ist.

EP 0 790 491 A2

Fig. 1

A(M)

I

Laserstrahl

1

2

2

11

7

11

5

I'

Schicht
Substrat

3

3

12

15    13    14    6

9

8

4

2

3

Fig. 2

c    n

α

10

α

5

7

6

Fig. 3

5

10

10

7

Fig.4

# Fig. 5